# EUROPÄISCHE PATENTSCHRIFT

(11) **EP 0 350 942 B1**
(45) Veröffentlichungstag und Bekanntmachung des Hinweises auf die Patenterteilung: **28.04.1993**
(21) Anmeldenummer: 89112942.1
(22) Anmeldetag: 14.07.1989
(51) Int. Cl.: B23K 26/00, B23K 26/12

(54) **Verfahren und Vorrichtung zum Bearbeiten von Werkstücken mit Laserstrahlung**
Process and device for machining work pieces with laser irradiation
Procédé et dispositif d'usinage à l'aie du rayonnement laser

(30) Priorität: 15.07.1988 DE 3824048
(43) Veröffentlichungstag der Anmeldung: 17.01.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: Beyer, Eckhard, Dr.-Ing., D-5100 Aachen (DE); Behler, Klaus, Dipl.-Ing., D-5100 Aachen (DE); Herziger, Gerd, Prof.Dr.-Ing., D-5106 Roetgen-Rott (DE)
(74) Vertreter: Eichler, Peter, Dipl.-Ing.

(56) Entgegenhaltungen:
- WO-A-86/00552
- GB-A- 2 099 349
- VDI ZEITSCHRIFT. vol. 128, no. 17, September 1986, DUSSELDORF DE Seiten 659 - 663; Ingo Decker: "Laserscneiden von Metallen"

## Beschreibung

Die Erfindung bezieht sich auf ein Verfahren zum Bearbeiten von Werkstücken mit Laserstrahlung, mit einer Bearbeitungszone, deren optische und/oder akustische Signale erfaßt werden, mit denen Istwerte gebildet werden, die mit einem werkstoff- und bearbeitungsspezifischen Prozeßdiagramm entsprechenden Sollwerten verglichen werden, wonach eine dem Vergleichsergebnis entsprechende Regelung im Sinne einer vorbestimmten Beeinflussung des Bearbeitungsvorgangs erfolgt.

Weiterhin bezieht sich die Erfindung auf eine Vorrichtung gemäß dem Oberbegriff des Anspruchs 9.

Ein solches Verfahren und eine solche Vorrichtung sind aus der DE-A-3 424 825 bekannt.

Beim Bearbeiten von Werkstücken mit Laserstrahlung kommt der Beeinflussung der Einkopplung von Strahlungsenergie in das Werkstück eine große Bedeutung zu. Diese Energieeinkopplung erfolgt entweder durch material- und wellenlängenabhängige Absorption der Strahlung und/oder durch anormale intensitätsabhängige Absorption infolge der Ausbildung eines laserinduzierten Plasmas. Wird eine bestimmte kritische Strahlungsintensität überschritten, so bildet sich durch Werkstoffverdampfung ein laserinduziertes Plasma aus, das mit sprunghafter Mehraufschmelzung von Werkstoff verbunden ist. Die Plasmabildung kann so stark ausgeprägt sein, daß eine Abschirmung des Werkstücks unter weitgehender Absorption der Strahlung im Plasma erfolgt. Es ist bekannt, die abschirmende Wirkung des Plasmas durch Gase zu beeinflussen. Die Beeinflussung betrifft die Rekombination von Ionen und Elektronen im Plasma. Durch die Rekombination verringert sich die Elektronendichte im Plasma und da die Absorption proportional zur Elektronendichte ist, verringert sich bei erhöhter Rekombination die Absorption im Plasma.

Die Beeinflussung des Plasmas durch Gas erfolgt derart, daß letzteres in den Bereich der Bearbeitungszone geblasen wird. Der Einsatz des Gases trägt jedoch zu einem nicht unwesentlichen Teil zu den Betriebskosten beim Bearbeiten bei. Infolgedessen ist es bekannt, möglichst wenig Gas zu verwenden. Es hat sich jedoch erwiesen, daß dann schon eine geringfügige Änderung der Prozeßparameter der Bearbeitung zu einer Verschlechterung des Bearbeitungsergebnisses führt, z.B. zur Verringerung der Einschweißtiefe und/oder zu vermehrter Porenbildung.

Aus VDI ZEITSCHRIFT vol.128, no. 17 September 1986, Düsseldorf Seiten 659 - 663; (Seite 659, Spalte 3,4 letzte Zeilen) ist es bekannt, beim Laserschneiden von Metallen ein Schneidgas einzusetzen, wobei der Schneidgasdruck rechnergesteuert sein kann. Es erfolgt eine Rückmeldung von Strahldaten zur Kontrolle des Laserstrahls. Eine Erfassung optischer und/oder akustischer Signale der Bearbeitungszone erfolgt nicht.

Der Erfindung liegt daher die Aufgabe zugrunde, ein Verfahren und eine Vorrichtung der eingangs genannten Art so zu verbessern, daß eine preiswerte und fehlerfreie Bearbeitung von Werkstücken mit Laserstrahlung ermöglicht wird.

Diese Aufgabe wird bei einem Verfahren der eingangs genannten Art dadurch gelöst, daß der überwachten Bearbeitungszone Prozeßgas zugeführt wird, und daß durch die Regelung die Art des Prozeßgases und mindestens ein Gaszufuhrparameter kontinuierlich unter Berücksichtigung des Überwachungsergebnisses beeinflußt wird.

Diese Aufgabe wird bei einer Vorrichtung der eingangs genannten Art durch die kennzeichnenden Merkmale des Anspruchs 9 gelöst.

Mit dem erfindungsgemäßen Verfahren wird eine Prozeßgasregelung ausgeführt, die kontinuierlich auf alle in der Bearbeitungszone erfaßbaren Vorgänge Einfluß nehmen kann, so daß fehlerhaftes Bearbeiten ausgeschlossen ist. Sämtliche optischen und/oder akustischen Signale der Bearbeitungszone führen zu einer Änderung der Art des Prozeßgases und zu einer Änderung der Gaszufuhr. Unter der Art des Prozeßgases wird hier dessen Zusammensetzung verstanden. Das Gas besteht also beispielsweise aus einem einzigen bestimmten Gas, beispielsweise Helium oder Argon, oder aus einem Gemisch von Gasen, bei dem die Zusammensetzung den Erfordernissen gemäß einstellbar ist. Unter einem Gaszufuhrparameter wird alles verstanden, was über die Art des Prozeßgases hinausgeht, also beispielsweise die Menge des Prozeßgases pro Zeiteinheit, die Strömungsgeschwindigkeit des Gases, dessen Verteilung im Bereich der Bearbeitungszone und weitere ähnliche Parameter, z.B. der Abstand, aus dem das Gas der Bearbeitungszone zugeführt wird.

Das werkstoff- und bearbeitungsspezifische Prozeßdiagramm zur Bestimmung der Sollwerte für die Regelung beinhaltet bzw. berücksichtigt alle Prozeßparameter, die zu einer Änderung der optischen und/oder akustischen Erscheinungen in der Bearbeitungszone führen können, beispielsweise den Werkstoff, die Bearbeitungsart, die Art der Laserstrahlung und deren Fokussierung sowie die Geometrie der Werkstücke, also die Strahlbahn, Höhenunterschiede oder unterschiedliche Zusammensetzungen und Schichtungen der Werkstücke, ferner unterschiedliche Vorschubgeschwindigkeiten bzw. Streckenenergien.

Ein Verfahren der eingangs genannten Art ist aus der DE-OS 34 24 825 bekannt. Bei diesem Verfahren wird zur Ausschaltung störender Einflüsse auf die Bearbeitung Einfluß auf die Laserstrahlung derart genommen, daß die Plasmabildung bzw. die Strahlungsabsorption durch das Plasma durch eine Regelung der Laserintensität beeinflußt wird. Diese Regelung muß sehr kurzzeitig erfolgen, damit unerwünschte Detonationserscheinungen des Plasmas vermieden werden. Eine derartige schnelle Regelung ist nicht problemlos. Demgegenüber kann es sich bei einem Verfahren zum Bearbeiten von Werkstücken, bei dem mit der Laserstrahlung in der Bearbeitungszone ein nichtabschirmendes Plasma erzeugt und durch die Regelung beeinflußt wird, als vorteilhaft erweisen, wenn bei der Regelung ein die Strahlungsabsorption durch das Plasma beeinflussendes Gas verwendet wird. Eine solche Regelung zeigt bereichsweise ein langsameres Verhalten, ist jedoch insbesondere bei geringerer Schweißgeschwindigkeit und größerer Laserleistung von guter Wirksamkeit.

Vorteilhaft ist es auch, wenn ein in der Bearbeitungszone Prozeßenergie lieferndes Gas verwendet wird. Die zusätzlich zur Verfügung gestellte Prozeßenergie dient der Unterstützung des Bearbeitungsprozesses, beispielsweise beim Schneiden. Die Prozeßenergie wird durch chemische Reaktion des Gases oder des Gasgemisches bereitgestellt, und zwar in Abhängigkeit von der erfindungsgemäßen Regelung jeweils in der erforderlichen Menge.

Von Vorteil ist es auch, das erfindungsgemäße Verfahren so auszugestalten, daß mit der Regelung ein die Zusammensetzung des Werkstoffs der Bearbeitungszone beeinflussendes Gas verwendet wird. In diesem Fall werden Bestandteile des Gases in den bearbeiteten Werkstoff überführt und dort deponiert oder zur Reaktion mit dem Werkstoff gebracht. Derartiges ist z.B. von Vorteil, wenn mit Laserstrahlung eine Oberflächenveredelung eines Werkstücks vorgenommen wird.

Es ist möglich, daß die Regelung zur Beherrschung eines Bearbeitungsvorgangs dient, bei dem eine oder mehrere der vorbeschriebenen Wirkungen erreicht werden sollen, also die Plasmabeeinflussung und/oder die Bereitstellung von Prozeßenergie und/oder die Beeinflussung der Zusammensetzung des Werkstoffs.

Vorteilhafterweise werden Prozeßdiagramme verwendet, deren die Art des Prozeßgases und dessen Zufuhr bestimmenden Sollwerte die zeitliche Abhängigkeit laser- und/oder bauteilbestimmter Prozeßparameter berücksichtigen. Unter laserbestimmten und bauteilbestimmten Prozeßparameter werden alle sonstigen beim Bearbeiten zu beachtenden Parameter verstanden, wie die Ausbildung der Werkstücke hinsichtlich Form und Abmessungen, deren Vorschubgeschwindigkeit sowie Laserleistung und -modulation. Durch die Berücksichtigung dieser Prozeßparameter beim Bearbeiten von Werkstücken mit einer Regelung der Art des Prozeßgases und mindestens eines Gaszufuhrparameters können eine Gasregelung und eine laser- oder bauteilseitige Regelung miteinander kombiniert werden. Beispielsweise ist es möglich, ein Verfahren gemäß der DE-OS 34 24 825 zur Beeinflussung der Laserintensität zu verwenden und in Abhängigkeit von der dazu beispielsweise geänderten Laserleistung die Art des Prozeßgases und dessen Zufuhr bestimmende Sollwerte zu ändern.

In Ausgestaltung der Erfindung werden einem Prozeßdiagramm entnehmbare Sollwerte der Art des Gases und seiner Zufuhr kontinuierlich auf ihre Auswirkungen in der Bearbeitungszone überwacht und bei Abweichung erfaßter Istwerte erfolgt eine Sollwertanpassung. Damit wird erreicht, daß auch unvorhersehbare Einflüsse auf die Bearbeitung erfaßt werden können. Diese Sollwertanpassung kann dazu dienen, neue Prozeßdiagramme zu erstellen.

Als optisches Signal wird das Plasmaleuchten integral oder spektral kontinuierlich erfaßt, und die Regelung erfolgt in Abhängigkeit davon, ob die Intensität und/oder Fluktuationen des abgestrahlten Lichts und/oder bestimmte Spektrallinien dieses Lichts vorgegebene Schwellwerte überoder unterschreiten. Die integrale Erfassung erfolgt dabei z.B. mit einer Fotodiode, deren elektrische Signale verwertet werden. Die spektrale Erfassung erfolgt z.B. mittels Filter, die nur Licht bestimmter Spektrallinien durchlassen, so daß ermittelt werden kann, ob Licht eines bestimmten Spektrums überhaupt vorhanden ist und/oder ob dieses Licht eine bestimmte, einen Schwellwert über- oder unterschreitende Intensität hat. Ein derartiges spektrales detektieren ist insbesondere von Bedeutung, wenn das Auftreten eines bestimmten Werkstoffs in zeitlicher Abhängigkeit ermittelt werden soll. Diese Aufgabe stellt sich beispielsweise beim Durchschweißen beschichteter Werkstoffe oder beim Verschweißen von Verbundwerkstoffen. Das plötzliche Auftreten einer bestimmten Spektrallinie besagt dann, daß die Bearbeitungszone bzw. die Schweißnaht eine bestimmte gewünschte oder unerwünschte Ausbildung hat, woraufhin die erforderliche Regelung einsetzen kann.

Abgesehen von den vorerwähnten optischen Erfassungsgrößen kann es von Vorteil sein, daß zur Erfassung optischer und/oder akustischer Signale die Temperatur in der Bearbeitungszone und/oder die Schmelzbadbewegung und/oder der Funkenflug verwendet werden. Die Temperatur in der Bearbeitungszone, beispielsweise die Temperatur im Plasma, gibt Hinweise auf den Bearbeitungszustand der Werkstücke. Beispielsweise treten in der Nähe der Verdampfungstemperatur eines Werkstoffs Anomalien auf, die durch Temperaturmessung vermieden werden können. Die Erfassung der Schmelzbadbewegung ist für die Veredelung von Werkstücken von Bedeutung und der Funkenflug kann zur Beurteilung von Schneidvorgängen eingesetzt werden.

Eine Vorrichtung zum Bearbeiten von Werkstücken mit Laserstrahlung, mit einer Laseroptik, mit optischer und/oder akustischer Überwachung der Bearbeitungszone, mit prozeßdiagrammgesteuerter Sollwertgebung, mit einem an einen Detektor und an einen Sollwertgeber angeschlossenen Rechner, und mit einer der Beeinflussung des Bearbeitungsvorgangs dienenden, rechnergesteuerten Einstelleinrichtung ist dadurch gekennzeichnet, daß eine die Art und die Zufuhr eines Prozeßgases für die bestrahlte Bearbeitungszone kontinuierlich unter Berücksichtigung des Überwachungsergebnisses bestimmende Einstelleinrichtung vorhanden ist. Die aus der DE-OS 34 24 825 bekannte Einstelleinrichtung dient der Erzeugung von Stellgrößen zur Beeinflussung der Intensität der Laserstrahlung, also beispielsweise der Beeinflussung der Laserleistung. Durch die erfindungsgemäße Einstelleinrichtung kann mit dem Prozeßgas direkt Einfluß auf die Bearbeitungszone genommen werden, indem die Art und die Zufuhr des Prozeßgases beeinflußt werden, je nach zu erreichendem Ziel. Für die Art und die Zufuhr des Prozeßgases gilt das oben zum erfindungsgemäßen Verfahren Gesagte.

In Ausgestaltung der erfindungsgemäßen Vorrichtung hat die Einstelleinrichtung mindestens zwei rechnergesteuerte Mischventile, die über eine rechnergesteuerte Dosiereinrichtung an eine in der Nähe der Bearbeitungszone mündende Gaszuleitung angeschlossen sind. Diese Vorrichtung gestattet es, ein oder mehrere Gase jeweils für sich oder gemischt in der jeweils gewünschten Menge anzuwenden. Die Anwendung erfolgt dabei rechnergesteuert, so daß auch ein zeitabhängiges Wirken der Einstelleinrichtung möglich ist.

Wenn die Gaszuleitung in eine oberhalb der Bearbeitungszone angeordnete Strahlschutzdüse mündet, kann das Prozeßgas zugleich als Schutzgas für die Laseroptik wirken.

Um einen optischen Detektor zur Vermeidung von Beschädigung möglichst weit von der Bearbeitungszone entfernt anordnen zu können, und um andererseits aber die Bearbeitungsvorgänge möglichst dicht an der Bearbeitungszone erfassen zu können, ist eine Lichtleitfaserleitung zur Erfassung optischer Signale mit einem Ende in der Nähe der Bearbeitungszone und mit dem anderen Ende an einem von der Bearbeitungszone entfernt angeordneten Detektor angeschlossen.

Die Erfindung wird anhand eines in der Zeichnung dargestellten Ausführungsbeispiels der Vorrichtung und weiterer erklärender Diagramme erläutert. Es zeigt:
- Fig. 1: eine schematische Darstellung einer erfindungsgemäßen Vorrichtung,
- Fig. 2: ein Prozeßdiagramm, und
- Fig. 3, 3a: die Abhängigkeit der Intensität des Plasmaleuchtens von der Zeit für eine bestimmte Werkstückgeometrie.

Ein Werkstück 1 soll mit Laserstrahlung 15 im Bereich einer Bearbeitungszone 2 bearbeitet werden. Das Bearbeiten ist beispielsweise ein Schweißen, insbesondere ein Schweißen kritischer Werkstoffe, wie beispielsweise Aluminium oder Aluminiumlegierungen oder wie beschichtete Werkstoffe, beispielsweise verzinkte Bleche. Das Bearbeiten kann aber auch ein Schneiden sein, beispielsweise das Herstellen komplizierter Formteile, oder ein Oberflächenveredeln, beispielsweise ein Nitrieren einer Lagerfläche.

Die Laserstrahlung 15 wird dem Werkstück 1 mittels einer Laseroptik 7 zugeführt, welche die erforderliche Fokussierung vornimmt. Die Laseroptik 7 ist von einer Strahlschutzdüse 19 umgeben, die die Optik 7 von Rückwirkungen der Bearbeitungszone 2 durch Gase und spritzende Schmelze des Werkstoffs schützt und auch ein mechanischer Schutz der Optik 7 ist.

Die Bearbeitungszone 2 des Werkstücks 1 wird bezüglich optischer und akustischer Signale überwacht. Hierzu dienen ein optischer Detektor 3 und ein akustischer Detektor 3′. Der optische Detektor 3 ist in einiger Entfernung von der Bearbeitungszone 2 angeordnet und stellt beispielsweise eine Fotodiode dar. Damit die optischen Signale der Bearbeitungszone 2 zuverlässig erfaßt werden, hat der Detektor 3 eine Lichtleitfaserleitung 4, deren freies Ende 4′ in unmittelbarer Nachbarschaft der Bearbeitungszone 2 angeordnet ist. Mit dem optischen Detektor 3 werden auf diese Weise alle zeitabhängigen optischen Signale der Bearbeitungszone 3 erfaßt, wie Leuchtintensitäten, Fluktuationen der Leuchterscheinungen, Wärmestrahlungsleuchten u.dgl.

Der akustische Detektor 3′ ist ein Mikrophon, beispielsweise ein Kondensatormikrofon, das gegen Beeinflussungen aus der Bearbeitungszone 2 geschützt ist und infolgedessen in relativer Nähe angeordnet werden kann. Unter akustischen Signalen werden die Lautstärke bzw. die Geräuschstärke verstanden, ferner die Signalhäufigkeit, die Tonhöhe, die Frequenz bzw. deren Veränderungen.

Die Detektoren 3, 3′ erzeugen elektrische Signale, die als Istwerte 10 einem Addierer 8′ eines Rechners 8 zugeleitet werden. Der Addierer 8′ erhält außerdem Sollwerte 11, so daß ein Soll-Ist-Wert-Vergleich durchgeführt wird. Die Differenz des Addierers 8′, der auch in den Rechner 8 integriert sein kann, wird vom Rechner 8 dazu benutzt, mit Stellsginalen 20 Einfluß auf eine Einstelleinrichtung 16 zu nehmen, mit der die Art und/oder die Zufuhr eines Prozeßgases 11, 12, 13 kontinuierlich unter Berücksichtigung des Überwachungsergebnisses erfolgt.

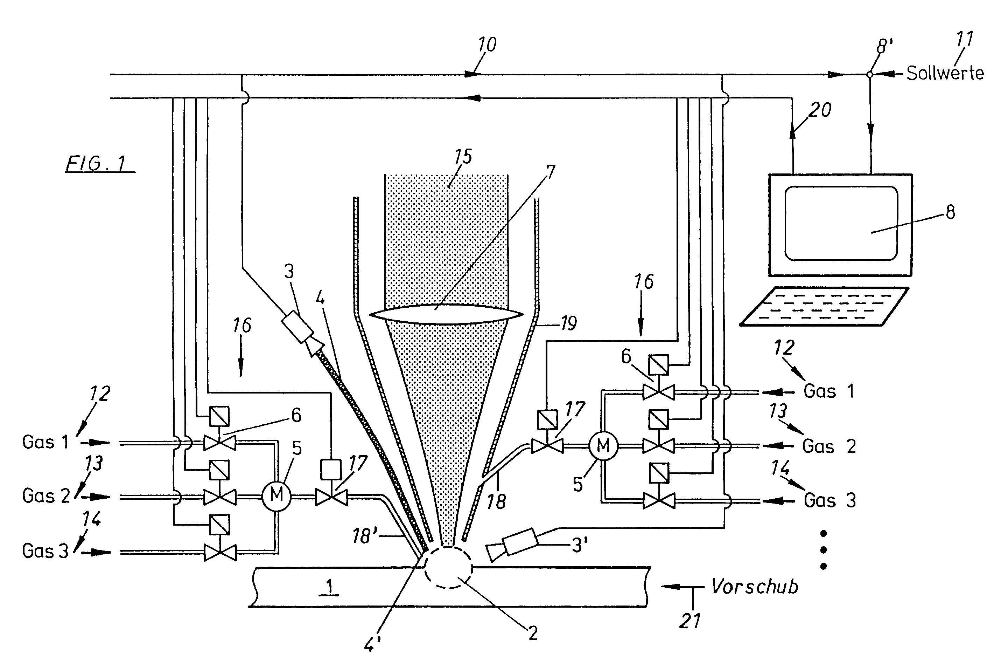

Die Einstelleinrichtung 16 besteht aus mehreren Mischventilen 6, mit denen jeweils ein Gas 11, 12, 13 zugeleitet wird. Die Zuleitung erfolgt in einen Mischer 5, der an eine Dosiereinrichtung 17 angeschlossen ist. Diese Dosiereinrichtung ist ebenfalls ein Mischventil und wie die Mischventile 6 rechnergesteuert. Mit dieser Einstelleinrichtung 16 ist es also möglich, das Gas 12 und/oder das Gas 13 und/oder das Gas 14 in den Mischer 5 zu geben, und zwar auch mit rechnergesteuerter Dosierung. Der Mischer 5 mischt die Gase 12, 13, 14 und leitet das Gasgemisch, oder bei entsprechender Einstellung durch die Mischventile 6 auch ein einzelnes Gas der Dosiervorrichtung 17 zu, welches die maximale Gasmenge pro Zeiteinheit bestimmt, die der Bearbeitungszone 2 zuströmt. Das Zuströmen erfolgt über eine Gaszuleitung 18, 18′, die den Bedürfnissen entsprechend ausgebildet ist. Der Anschluß der Gaszuleitung 18 erfolgt beispielsweise entsprechend der rechten Darstellung der Fig. 1 in die Strahlschutzdüse 19, so daß das Prozeßgas zugleich als Schutzgas benutzt werden kann, welches durch Strömung zur Bearbeitungszone 2 ein entgegengesetztes Strömen von bei der Bearbeitung entstehenden Gasen und/oder Partikeln verhindert, das die Wirkung der Laseroptik 7 beeinträchtigt oder letztere beschädigen könnte.

Entsprechend der linken Darstellung der Fig. 1 kann das Prozeßgas aber auch über eine Gaszuleitung 18′ in die unmittelbare Nachbarschaft der Bearbeitungszone 2 geleitet werden, beispielsweise in Vorschubrichtung 21 symmetrisch vor der Bearbeitungszone 2. Es ergibt sich dann eine entsprechend symmetrische Bespülung der Bearbeitungszone 2 mit Prozeßgas, während die Laseroptik 7 beispielsweise durch Zufließen eines Schutzgases durch die Strahlschutzdüse 19 geschützt wird.

Die Bespülung der Bearbeitungszone 2 mit Gas kann auch dadurch beeinflußt werden, daß die Strömungsgeometrie des Gases verändert wird, beispielsweise durch Bewegen der die Zuleitung des Prozeßgases bewirkenden Strahlschutzdüse 19. Von Bedeutung für die Erfindung ist, daß alle möglichen Parameter im Zusammenhang mit der Anwendung eines Prozeßgases kontinuierlich eingestellt werden können, so daß entsprechender Einfluß auf die Ausbildung der Reaktionsprozesse in der Bearbeitungszone 2 genommen werden kann, z.B. auf die Ausbildung eines Plasmas zur Energieeinkoppelung in das Werkstück 1.

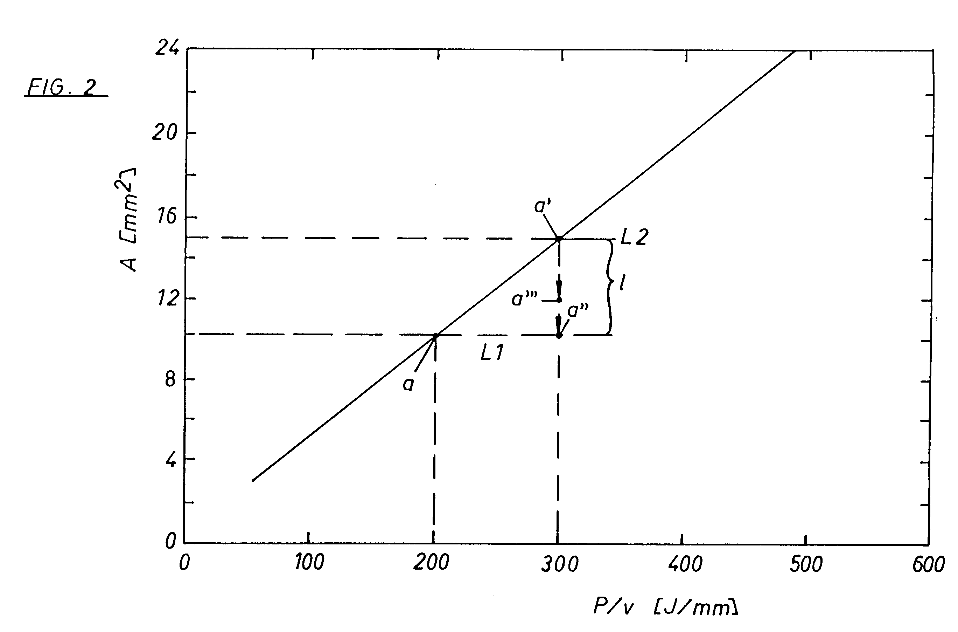

Die Sollwerte 11 werden dem Rechner 8 entsprechend einem werkstoff- und bearbeitungsspezifischen Prozeßdiagramm eingegeben. Ein solches Prozeßdiagramm ist beispielsweise in Fig. 2 dargestellt, welches die Größe A des Schmelzflecks bzw. der Bearbeitungszone über der Streckenenergie P/v als lineare Funktion für einen Kohlendioxidlaser des 2 bis 10 Kilowattbereichs für den Werkstoff Stahl darstellt. Wird beispielsweise mit einer Streckenenergie von 200 J/mm bei einer bestimmten Werkstückausbildung geschweißt, so beträgt die Schmelzfleckgröße A beispielsweise 10 mm². Für den entsprechenden Arbeitspunkt a des Prozeßdiagramms der Fig. 2 gibt die Bearbeitungszone 2 bestimmte Leuchterscheinungen L1 ab, die von einem dort ausgebildeten Plasma herrühren und mit dem Detektor 3 erfaßt werden. Entsprechen die Istwerte 10 den Sollwerten 11, so hat der Rechner 8 keine Veranlassung, eine einmal gewählte und mit der Einstelleinrichtung 16 durchgeführte Prozeßgaszufuhr zu ändern. Wird jedoch die Schweißgeschwindigkeit verringert, z.B. weil die Bearbeitungsbahn eine Kurve aufweist, so erhöht sich dadurch die Streckenenergie z.B. auf 300. Der Arbeitspunkt verlagert sich also z.B. gemäß a′, verbunden mit Leuchterscheinungen L2. Diese Leuchterscheinungen L2 sind gegenüber L1 verstärkt, weil sich infolge der verstärkten Energiezufuhr eine erhöhte Verdampfung des Werkstoffs und eine dementsprechende Vergrößerung des Plasmas ergibt. Durch Ausmessung der in Fig. 2 angedeuteten Signaldifferenz 1 = L2 - L1, was einer entsprechenden Änderung der Istwerte 10 entspricht, kann der Rechner dem Vergleichsergebnis entsprechenden Einfluß auf den Bearbeitungsvorgang nehmen, indem beispielsweise die Menge des Prozeßgases 12, 13, 14 mit der Dosiereinrichtung 17 vergrößert wird. Das Prozeßgas erhöht die Rekombination der Plasmateilchen, so daß eine Verringerung der Energieeinkopplung in das Werkstück 1 erfolgt, verbunden mit Verringerung von Werkstoffverdampfung, daraus folgender Abnahme der Plasmabildung und Verringerung der Leuchterscheinung.

Fig. 2 weist als weiteren Parameter eine Änderung der Schmelzfleckgröße A von 10 auf 15 mm² aus, wenn sich der Arbeitspunkt a nach a′ verlagert. Auch die Änderung der Schmelzfleckgröße A könnte direkt beobachtet und zur Ausregelung benutzt werden, beispielsweise durch Anwendung einer Videokamera mit rechnergesteuerter Schmelzfleckgrößenerfassung.

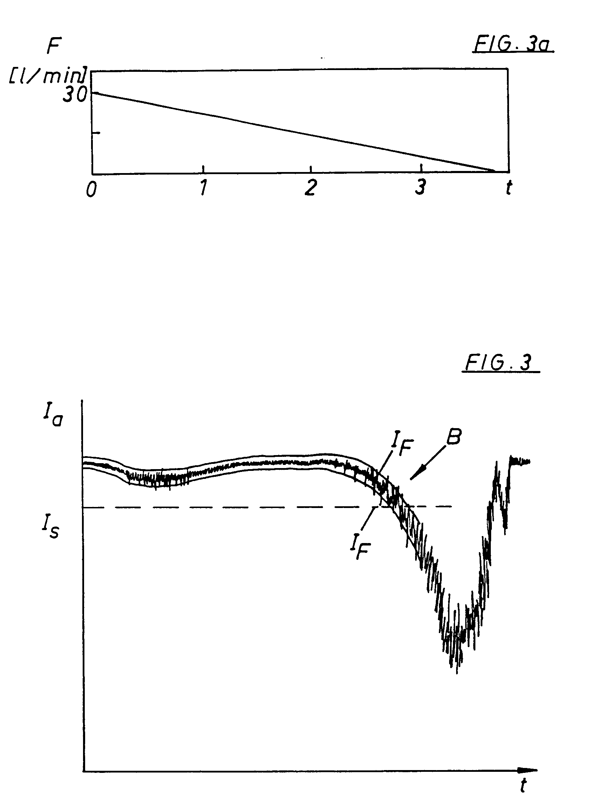

Die Fig. 3, 3a lassen die Abhängigkeit der Leuchterscheinungen der Bearbeitungszone vom Prozeßgasfluß erkennen. Fig. 3a zeigt, daß sich der Prozeßgasfluß F von z.B. 30 l/min in vier Sekunden auf 0 verringern soll. Fig. 3 zeigt das Antwortverhalten der Intensität der Argonlinie der Leuchtscheinung der Bearbeitungszone in einem Diagramm I_{A} = f (t). Es ist ersichtlich, daß die Leuchtintensität einen Einbruch erleidet und zugleich eine erhebliche Steigerung der Fluktuation dieser Leuchterscheinungen auftritt. Dementsprechend könnte der Schwellwert I_{S} zur Regelung benutzt werden, beispielsweise zur Erhöhung der Gaszufuhr. Es könnten aber auch die auftretenden Fluktuationen dazu benutzt werden, um den Zeitpunkt zu bestimmten, in dem eine Regelung des Gasflusses erfolgen muß. Dazu wird davon ausgegangen, daß in dem Bereich B der Fig. 3 Grenzwerte I_{F} durch die Fluktuationen erreicht werden, was ebenfalls meßtechnisch ermittelt wird und zu einer Einflußnahme auf einen Gaszufuhrparameter führt.

Es versteht sich, daß die Darstellungen der Fig. 2, 3 und 3a jeweils nur für eine laser- und/oder bauteilbestimmte Konfiguration mit entsprechenden Prozeßparametern gelten. Würde beispielsweise die Fokussierung der Laserstrahlung 15 und damit der Strahlfleck im Bereich der Bearbeitungszone 2 geändert, so hätte Fig. 2 ein anderes Aussehen. Für die Erzeugung der Sollwerte 11 ist daher von Bedeutung, daß die Prozeßdiagramme die laser- und/oder bauteilbestimmten Prozeßparameter berücksichtigen, insbesondere deren zeitliche Abhängigkeit. Mit dem Verfahren wird also auch auf diese zeitliche Abhängigkeit durch entsprechende Einflußnahme auf die Art des Prozeßgases und/oder dessen Zufuhr Rücksicht genommen.

Erfahrungsgemäß sind beim Bearbeiten von Werkstücken auch Einflüsse vorhanden, die nicht von vornherein in einem Prozeßdiagramm berücksichtigt werden können. Das führt beispielsweise dazu, daß in Fig. 2 der Arbeitspunkt a′ durch die Beeinflussung der Prozeßgaszufuhr nicht nach a˝ verlagert wird, sondern lediglich nach a‴. Dementsprechend werden die Istwerte 10 abweichen, weil beispielsweise die Leuchtintensität und/oder die Schweißfleckgröße A bei a‴ von denen des Punktes a˝ abweichen. Wegen der Abweichung der angestrebten Auswirkungen auf die Bearbeitungszone 2 durch die von dem Prozeßdiagramm vorgegebenen Sollwerte für die Regelung des Gasparameters kann in diesem Fall der Sollwert entsprechend angepaßt werden. Eine solche Anpassung erfolgt insbesondere dann, wenn die festgestellten Abweichungen andauern, wenn also im Mittel eine bestimmte Abweichung festgestellt wird.

## Patentansprüche

1. Verfahren zum Bearbeiten von Werkstücken (1) mit Laserstrahlung (15), mit einer Bearbeitungszone (2), deren optische und/oder akustische Signale erfaßt werden, mit denen Istwerte gebildet werden, die mit einem werkstoff- und bearbeitungsspezifischen Prozeßdiagramm entsprechenden Sollwerten verglichen werden, wonach eine dem Vergleichsergebnis entsprechende Regelung im Sinne einer vorbestimmten Beeinflussung des Bearbeitungsvorgangs erfolgt, **dadurch gekennzeichnet,** daß der überwachten Bearbeitungszone (2) Prozeßgas (12,13,14) zugeführt wird, und daß durch die Regelung die Art des Prozeßgases (12,13,14) und mindestens ein Gaszufuhrparameter kontinuierlich unter Berücksichtigung des Überwachungsergebnisses beeinflußt wird.

2. Verfahren nach Anspruch 1, bei dem mit der Laserstrahlung (15) in der Bearbeitungszone (2) ein nicht abschirmendes Plasma erzeugt und durch die Regelung beeinflußt wird, **dadurch gekennzeichnet,** daß bei der Regelung ein die Strahlungsabsorption durch das Plasma beeinflussendes Gas (12,13,14) verwendet wird.

3. Verfahren nach Anspruch 1 oder 2, **dadurch gekennzeichnet,** daß ein in der Bearbeitungszone (2) Prozeßenergie lieferndes Gas (12,13,14) verwendet wird.

4. Verfahren nach einem der Ansprüche 1 bis 3, **dadurch gekennzeichnet,** daß ein die Zusammensetzung des Werkstoffs der Bearbeitungszone (2) beeinflussendes Gas (12,13,14) verwendet wird.

5. Verfahren nach einem der Ansprüche 1 bis 4, **dadurch gekennzeichnet,** daß Prozeßdiagramme verwendet werden, deren die Art des Prozeßgases (12,13,14) und dessen Zufuhr bestimmenden Sollwerte (11) die zeitliche Abhängigkeit laser- und/oder bauteilbestimmter Prozeßparameter berücksichtigen.

6. Verfahren nach einem der Ansprüche 1 bis 5, **dadurch gekennzeichnet,** daß einem Prozeßdiagramm entnehmbare Sollwerte die Art des Gases (12,13,14) und seiner Zufuhr kontinuierlich auf ihre Auswirkungen in der Bearbeitungszone (2) überwacht werden und bei Abweichungen erfaßter Istwerte (10) eine Sollwertanpassung erfolgt.

7. Verfahren nach einem der Ansprüche 1 bis 6, **dadurch gekennzeichnet,** daß als optisches Signal das Plasmaleuchten integral oder spektral kontinuierlich erfaßt wird, und daß die Regelung in Abhängigkeit davon erfolgt, ob die Intensität und/oder Fluktuationen des abgestrahlten Lichts und/oder bestimmter Spektrallinien dieses Lichts vorgegebene Schwellwerte über- oder unterschreiten.

8. Verfahren nach einem der Ansprüche 1 bis 6, **dadurch gekennzeichnet,** daß zur Erfassung optischer und/oder akustischer Signale die Temperatur in der Bearbeitungszone (2) und/oder die Schmelzbadbewegung und/oder der Funkenflug verwendet werden.

9. Vorrichtung zum Bearbeiten von Werkstücken (1) mit Laserstrahlung (15), mit einer Laseroptik (7), mit optischer und/oder akustischer Überwachung der Bearbeitungszone (2), mit prozeßdiagrammgesteuerter Sollwertgebung, mit einem an einen Detektor (3,3') und an einen Sollwertgeber angeschlossenen Rechner (8), und mit einer der Beeinflussung des Bearbeitungsvorgangs dienenden, rechnergesteuerten Regelungseinrichtung, **dadurch gekennzeichnet,** daß eine die Art und die Zufuhr eines Prozeßgases (12,13,14) für die bestrahlte Bearbeitungszone (2) kontinuierlich unter Berücksichtigung des Überwachungsergebnisses bestimmende Einstelleinrichtung (16) vorhanden ist.

10. Vorrichtung nach Anspruch 9, **dadurch gekennzeichnet,** daß die Einstelleinrichtung (16) mindestens zwei rechnergesteuerte Mischventile (6) hat, die über eine rechnergesteuerte Dosiereinrichtung (17) an eine in der Nähe der Bearbeitungszone (2) mündende Gaszuleitung (18, 18') angeschlossen sind.

11. Vorrichtung nach Anspruch 9 oder 10, **dadurch gekennzeichnet,** daß die Gaszuleitung (18) in eine oberhalb der Bearbeitungszone (2) angeordnete Strahlschutzdüse (19) mündet.

12. Vorrichtung nach einem der Ansprüche 9 bis 11, **dadurch gekennzeichnet,** daß eine Lichtleitfaserleitung (4) zur Erfassung optischer Signale mit einem Ende (4') in der Nähe der Bearbeitungszone (2) und mit dem anderen Ende an einem von der Bearbeitungszone entfernt angeordneten Detektor (3) angeschlossen ist.

## Claims

1. Process for the treatment of workpieces (1) with laser radiation (15), within a treatment zone (2) where optical and/or acoustic signals are detected, from which actual values are created which are compared with desired values corresponding to a process diagram which is specific to the material and treatment, after which a control corresponding to the result of the comparison is effected in the sense of a predetermined influencing of the treatment process, characterised in that process gas (12, 13, 14) is supplied to the monitored treatment zone (2), and in that by means of the control the type of process gas (12, 13, 14) and at least one gas supply parameter are influenced continuously having regard to the results of the monitoring.

2. Process according to claim 1, in which a non-shielded invasive plasma is produced by the laser radiation (15) in the treatment zone (2) and is influenced by the control, characterised in that a gas (12, 13, 14) which influences the absorption of radiation by the plasma is used in the control.

3. Process according to claim 1 or 2, characterised in that a gas (12, 13, 14) which supplies process energy to the treatment zone (2) is used.

4. Process according to one of claims 1 to 3, characterised in that a gas (12, 13, 14) which influences the composition of the material of the treatment zone (2) is used.

5. Process according to one of claims 1 to 4, characterised in that process diagrams are used whose desired values (11) determining the type of the process gas (12, 13, 14) and its supply take into account the time-wise dependency of process parameters which are specific to the laser and/or specific to the article.

6. Process according to one of claims 1 to 5, characterized in that desired values derivable from a process diagram for the type of gas (12, 13, 14) and its supply are monitored continuously for their effects in the treatment zone (2), and actual values (10) detected when deviations occur cause adaptation of the desired values.

7. Process according to one of claims 1 to 6, characterized in that the plasma light integrally or spectrally is detected continuously as the optical signal, and the control is effected in dependence upon whether threshold values set for the intensity and/or fluctuations of the radiant light and/or specific spectral lines of this light are exceeded or not reached.

8. Process according to one of claims 1 to 6, characterized in that the temperature in the treatment zone (2) and/or the movement of the melt bath and/or the spark trajectory are used for the determination of optical and/or acoustic signals.

9. Apparatus for the treatment of workpieces (1) with laser radiation (15), comprising laser optics (7), optical and/or acoustic monitoring means for the treatment zone (2), means to produce desired values controlled by a process diagram, computer means (8) connected to a detector (3, 3') and the means to produce desired values, and a computer-controlled control device serving to influence the treatment process, characterised in that a setting device (16) is provided continuously determining the type and the supply of a process gas (12, 13, 14) for the irradiated treatment zone (2) having regard to the results of the monitoring.

10. Apparatus according to claim 9, characterised in that the setting device (16) has at least two computer-controlled mixing valves (6) which are connected by means of a computer-controlled dosing device (17) to a gas conduit (18, 18') which issues adjacent to the treatment zone (2).

11. Apparatus according to claim 9 or 10, characterised in that the gas conduit (18) issues into a radiation protective nozzle (19) arranged above the treatment zone (2).

12. Apparatus according to one of claims 9 to 11, characterised in that a light-conductive fibre-optic conductor (4) for detecting optical signals is connected with one end (4') adjacent to the treatment zone (2) and with the other end to a detector (3) arranged remote from the treatment zone.

## Revendications

1. Procédé pour usiner des pièces (1) à l'aide d'un rayonnement laser (15), au moyen d'une zone d'usinage (2) dont les signaux optiques et/ou acoustiques sont détectés pour définir des valeurs réelles qui sont comparées à des valeurs théoriques correspondant à un diagramme opérationnel spécifique d'un matériau et d'un usinage, après quoi un réglage correspondant au résultat de la comparaison a lieu dans le sens d'une influence prédéfinie exercée sur le déroulement de l'usinage, caractérisé en ce qu'un gaz opérationnel (12, 13, 14) est amené vers la zone d'usinage (2) contrôlée, et en ce que le type de gaz opérationnel (12, 13, 14) et un ou plusieurs paramètres d'amenée de gaz sont influencés de façon continue par le réglage, compte tenu du résultat du contrôle.

2. Procédé selon la revendication 1, suivant lequel, grâce au rayonnement laser (15) dans la zone d'usinage (2), un plasma ne faisant pas écran est produit et influencé par le réglage, caractérisé en ce qu'on utilise, pour le réglage, un gaz (12, 13, 14) influençant l'absorption de rayonnement par le plasma.

3. Procédé selon la revendication 1 ou 2, caractérisé en ce qu'on utilise un gaz (12, 13, 14) fournissant de l'énergie opérationnelle dans la zone d'usinage (2).

4. Procédé selon l'une des revendications 1 à 3, caractérisé en ce qu'on utilise un gaz (12, 13, 1') influençant la composition du matériau de la zone d'usinage (2).

5. Procédé selon l'une des revendications 1 à 4, caractérisé en ce qu on utilise des diagrammes opérationnels dont les valeurs théoriques (11) définissant le type de gaz opérationnel (12, 13, 14) et son amenée tiennent compte de la variation dans le temps des paramètres opérationnels définis par le laser et/ou l'élément de construction.

6. Procédé selon l'une des revendications 1 à 5, caractérisé en ce que les répercussions de valeurs théoriques, concernant le gaz (12, 13, 14) et son amenée, aptes à être lues sur un diagramme opérationnel, sont contrôlées de façon continue dans la zone d'usinage (2), et une adaptation des valeurs théoriques a lieu en cas de divergences de valeurs réelles (10) détectées.

7. Procédé selon l'une des revendications 1 à 6, caractérisé en ce que, comme signal optique, l'éclairement du plasma est détecté en continu de façon intégrale ou spectrale, et en ce que le réglage se fait suivant que l'intensité et/ou des fluctuations de la lumière émise et/ou de raies spectrales définies de cette lumière sont supérieures ou inférieures à des valeurs seuils prédéfinies.

8. Procédé selon l'une des revendications 1 à 6, caractérisé en ce que, pour détecter des signaux optiques et/ou acoustiques, on utilise la température régnant dans la zone d'usinage (2) et/ou le mouvement du bain de fusion et/ou la projection d'étincelles.

9. Dispositif pour usiner des pièces (1) à l'aide d'un rayonnement laser (15), comportant un dispositif optique à laser (7), un contrôle optique et/ou acoustique de la zone d'usinage (2), une émission de valeurs théoriques commandées par un diagramme opérationnel, un ordinateur (8) relié à un détecteur (3, 3') et à un émetteur de valeurs théoriques, et un dispositif de réglage commandé par ordinateur et servant à influencer le déroulement de l'usinage, caractérisé en ce qu'il est prévu un dispositif d'ajustement (16) définissant de façon continue le type et l'amenée d'un gaz opérationnel (12, 13, 14) pour la zone d'usinage irradiée (2), en tenant compte du résultat du contrôle.

10. Dispositif selon la revendication 9, caractérisé en ce que le dispositif d'ajustement (16) possède au moins deux vannes mélangeuses (6) qui sont commandées par ordinateur et qui sont reliées, par l'intermédiaire d'un dispositif doseur (17) commandé par ordinateur, à une conduite d'arrivée de gaz (18, 18') débouchant à proximité de la zone d'usinage (2).

11. Dispositif selon la revendication 9 ou 10, caractérisé en ce que la conduite d'arrivée de gaz (18) débouche dans une tuyère de protection de rayonnement (19) disposée au-dessus de la zone d'usinage (2).

12. Dispositif selon l'une des revendications 9 à 11, caractérisé en ce qu'un câble de fibres optiques (4) est relié, en vue de la détection de signaux optiques, à proximité de la zone d'usinage (2), au niveau d'une extrémité (4'), tandis que sa seconde extrémité est reliée à un détecteur (3) disposé à une certaine distance de la zone d'usinage.
